(19)

Europäisches
Patentamt
European
Patent Office
Office européen
des brevets

(11) **EP 3 876 204 A2**

(12) **EUROPEAN PATENT APPLICATION**

(43) Date of publication:
**08.09.2021 Bulletin 2021/36**

(51) Int Cl.:
***G06T 13/40*** *(2011.01)*　***G06T 17/00*** *(2006.01)*

(21) Application number: **21179408.6**

(22) Date of filing: **15.06.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2020　CN 202011621722**

(71) Applicant: **BEIJING BAIDU NETCOM SCIENCE
AND
TECHNOLOGY CO. LTD.
100085 Beijing (CN)**

(72) Inventors:
• **LIN, Tianwei**
　**Beijing, 100085 (CN)**
• **LI, Fu**
　**Beijing, 100085 (CN)**
• **YE, Xiaoqing**
　**Beijing, 100085 (CN)**
• **ZHANG, Henan**
　**Beijing, 100085 (CN)**
• **LI, Xin**
　**Beijing, 100085 (CN)**

(74) Representative: **V.O.
P.O. Box 87930
2508 DH Den Haag (NL)**

(54) **METHOD AND APPARATUS FOR GENERATING HUMAN BODY THREE-DIMENSIONAL MODEL, DEVICE AND STORAGE MEDIUM**

(57)　The present disclosure discloses a method and apparatus for generating a human body three-dimensional model, a device and a storage medium, and relates to the fields of deep learning and computer vision. A specific implementation of the method includes: receiving a single human body image, and extracting an SMPL human body three-dimensional model corresponding to the human body image and a PIFu human body three-dimensional model corresponding to the human body image; matching the SMPL human body three-dimensional model with the PIFu human body three-dimensional model to obtain a matching result; determining a vertex of the SMPL human body three-dimensional model closest to a vertex of the PIFu human body three-dimensional model based on the matching result to obtain a binding weight of the vertex of the PIFu human body three-dimensional model and each skeleton point of the SMPL human body three-dimensional model; and outputting a drivable human body three-dimensional model. According to this implementation, the cost of generating the human body three-dimensional model is reduced and the efficiency of the generation is improved.

Fig. 4

EP 3 876 204 A2

**Description**

TECHNICAL FIELD

The present disclosure relates to the field of computer, specifically to the field of artificial intelligence such as deep learning and computer vision, and particularly to a method and apparatus for generating a human body three-dimensional model, a device and a storage medium.

BACKGROUND

In a traditional method, in order to obtain a high-precision and drivable human body three-dimensional (3D) model, it is required to use a scanning device to reconstruct a human body, and manually bind a surface vertex and a skeleton point of the 3D model.

SUMMARY

Embodiments of the present disclosure proposes a method and apparatus for generating a human body three-dimensional model, a device, a storage medium, and a computer program product.

According to a first aspect, an embodiment of the present disclosure provides a method for generating a human body three-dimensional model, including: receiving a single human body image, and extracting a Skinned Multi-Person Linear (SMPL) human body three-dimensional model corresponding to the human body image and a Pixel-aligned Implicit Function (PIFu) human body three-dimensional model corresponding to the human body image; matching the SMPL human body three-dimensional model with the PIFu human body three-dimensional model to obtain a matching result of a vertex of the PIFu human body three-dimensional model and the SMPL human body three-dimensional model; determining a vertex of the SMPL human body three-dimensional model closest to the vertex of the PIFu human body three-dimensional model based on the matching result to obtain a binding weight of the vertex of the PIFu human body three-dimensional model and each skeleton point of the SMPL human body three-dimensional model; and outputting a drivable human body three-dimensional model, the drivable human body three-dimensional model including the PIFu human body three-dimensional model, each skeleton point of the SMPL human body three-dimensional model, and the binding weight of the vertex of the PIFu human body three-dimensional model and each skeleton point of the SMPL human body three-dimensional model.

According to a first aspect, an embodiment of the present disclosure provides an apparatus for generating a human body three-dimensional model, including: an extracting module, configured to receive a single human body image, and extract a Skinned Multi-Person Linear (SMPL) human body three-dimensional model corresponding to the human body image and a Pixel-aligned Implicit Function (PIFu) human body three-dimensional model corresponding to the human body image; a matching module, configured to match the SMPL human body three-dimensional model with the PIFu human body three-dimensional model to obtain a matching result of a vertex of the PIFu human body three-dimensional model and the SMPL human body three-dimensional model; a determining module, configured to determine a vertex of the SMPL human body three-dimensional model closest to the vertex of the PIFu human body three-dimensional model based on the matching result to obtain a binding weight of the vertex of the PIFu human body three-dimensional model and each skeleton point of the SMPL human body three-dimensional model; and an outputting module, configured to output a drivable human body three-dimensional model, the drivable human body three-dimensional model including the PIFu human body three-dimensional model, each skeleton point of the SMPL human body three-dimensional model, and the binding weight of the vertex of the PIFu human body three-dimensional model and the each skeleton point of the SMPL human body three-dimensional model.

According to a third aspect, an embodiment of the present disclosure provides an electronic device, including: at least one processor; and a memory, communicated with the at least one processor. The memory stores an instruction executable by the at least one processor, and the instruction is executed by the at least one processor, to enable the at least one processor to perform the method according to any implementation in the first aspect.

According to a fourth aspect, an embodiment of the present disclosure provides a non-transitory computer readable storage medium, storing a computer instruction. The computer instruction is used to cause a computer to perform the method according to any implementation in the first aspect.

According to a fifth aspect, an embodiment of the present disclosure provides a computer program product, including a computer program. The computer program, when executed by a processor, implements the method according to any implementation in the first aspect.

According to the method and apparatus for generating a human body three-dimensional model, the device and the storage medium that are provided in the embodiments of the present disclosure, the single human body image is first received, and the SMPL human body three-dimensional model and the PIFu human body three-dimensional model that correspond to the human body image are extracted. Then, the matching is performed on the SMPL human body three-dimensional model and the PIFu human body three-dimensional model to obtain the matching result of the vertex of the PIFu human body three-dimensional model and the SMPL human body three-dimensional model. Next, the vertex of the SMPL human body three-dimensional model that is closest to the vertex of the PIFu human body three-dimensional model is determined based on the matching result, to obtain the binding weight of the vertex of the PIFu human body three-dimensional model and each skeleton point of the SMPL human body three-dimensional model. Finally, the drivable human body three-dimensional model is outputted. The present disclosure provides a method of generating a driveable human body three-dimensional model based on a single image, which reduces the cost of generating the driveable human body three-dimensional model and improves the efficiency of generating the driveable human body three-dimensional model.

It should be understood that the content described in this portion is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

After reading detailed descriptions for non-limiting embodiments given with reference to following accompanying drawings, other features, objectives and advantages of the present disclosure will be more apparent. The accompanying drawings are used for a better understanding of the scheme, and do not constitute a limitation to the present disclosure.

Fig. 1 is a diagram of an example system architecture in which embodiments of the present disclosure may be applied;

Fig. 2 is a flowchart of a method for generating a human body three-dimensional model according to an embodiment of the present disclosure;

Fig. 3 is a flowchart of the method for generating a human body three-dimensional model according to another embodiment of the present disclosure;

Fig. 4 is a driving effect diagram of an outputted drivable human body three-dimensional model;

Fig. 5 is an exploded flow diagram of a matching step in the method for generating a human body three-dimensional model shown in Fig. 3;

Fig. 6 illustrates 2D projection diagrams of 6 portions of an SMPL model;

Fig. 7 is a 2D projection diagram of a PIFu model;

Fig. 8 is a segmentation diagram of the 2D projection diagram of the PIFu model;

Fig. 9 is a diagram of a 3D matching result generated based on a 2D matching result;

Fig. 10 is a schematic structural diagram of an apparatus for generating a human body three-dimensional model according to an embodiment of the present disclosure; and

Fig. 11 is a block diagram of an electronic device used to implement a method for generating a human body three-dimensional model according to embodiments of the present disclosure.

DETAILED DESCRIPTION OF EMBODIMENTS

Example embodiments of the present disclosure are described below in combination with accompanying drawings, and various details of embodiments of the present disclosure are included in the description to facilitate understanding, and should be considered as examples. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that embodiments in the present disclosure and the features in the embodiments may be combined with each other on a non-conflict basis. The present disclosure will be described below in detail with reference to the accompanying drawings and in combination with the embodiments.

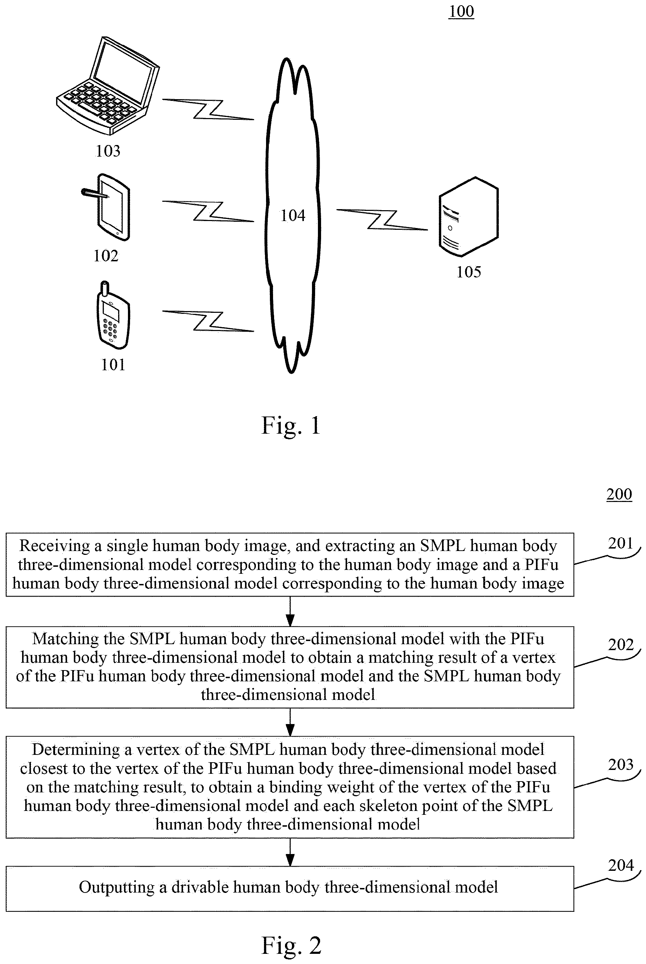

Fig. 1 illustrates an example system architecture 100 in which a method for generating a human body three-dimensional model or an apparatus for generating a human body three-dimensional model according to embodiments of the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may interact with the server 105 via the network 104 by using the terminal devices 101, 102 and 103, to receive or send a human body image, etc. Various client applications (e.g., shooting software) may be installed on the terminal devices 101, 102 and 103.

The terminal devices 101, 102 and 103 may be hardware or software. When the terminal devices 101, 102 and 103 are the hardware, the terminal devices 101, 102 and 103 may be various electronic devices, including, but not limited to, a smart phone, a tablet computer, a laptop portable computer, a desktop computer and the like. When the terminal devices 101, 102 and 103 are the software, the terminal devices 101, 102 and 103 may be installed in the above listed electronic devices. The terminal devices 101, 102 and 103 may be implemented as a plurality of pieces of software or a plurality of software modules, or as a single piece of software or a single software module, which will not be specifically defined here.

The server 105 may provide various services. For example, the server 105 may analyze and process the human body image acquired from the terminal devices 101, 102 and 103, and generate a processing result (e.g., a drivable human body three-dimensional model).

It should be noted that the server 105 may be hardware or software. When the server 105 is the hardware, the server 105 may be implemented as a distributed server cluster composed of a plurality of servers, or may be implemented as a single server. When the server 105 is the software, the server 105 may be implemented as a plurality of pieces of software or a plurality of software modules (e.g., software or software modules for providing a distributed service), or may be implemented as a single piece of software or a single software module, which will not be specifically defined here.

It should be noted that the method for generating a human body three-dimensional model provided in the embodiments of the present disclosure is generally performed by the server 105. Correspondingly, the apparatus for generating a human body three-dimensional model is generally provided in the server 105.

It should be appreciated that the numbers of the terminal devices, the networks, and the servers in Fig. 1 are merely illustrative. Any number of terminal devices, networks, and servers may be provided based on actual requirements. In the situation where the server 105 stores a human body image, the system architecture 100 may not be provided with the terminal devices 101, 102 and 103 and the network 104. In addition, in the situation where the terminal devices 101, 102 and 103 have a generation capability, the method for generating a human body three-dimensional model provided in the embodiments of the present disclosure may also be performed by the terminal devices 101, 102 and 103. Correspondingly, the apparatus for generating a human body three-dimensional model may also be provided in the terminal devices 101, 102 and 103. At this point, the system architecture 100 may not be provided with the network 104 and the server 105.

Further referring to Fig. 2, Fig. 2 illustrates a flow 200 of a method for generating a human body three-dimensional model according to an embodiment of the present disclosure. The method for generating a human body three-dimensional model includes the following steps.

Step 201, receiving a single human body image, and extracting a Skinned Multi-Person Linear (SMPL) human body three-dimensional model corresponding to the human body image and a Pixel-aligned Implicit Function (PIFu) human body three-dimensional model corresponding to the human body image.

In this embodiment, an executing body (e.g., the server 105 shown in Fig. 1) of the method for generating a human body three-dimensional model may receive a single human body image inputted by a user, and extract the SMPL human body three-dimensional model and the PIFu human body three-dimensional model that correspond to the human body image. Specifically, the executing body receives the single human image inputted by the user, and the image may be a color image of a whole human body. The human body image is inputted into an existing SMPL human body 3D model and an existing PIFu human body 3D model, thus obtaining the SMPL human body 3D model (hereinafter referred to as "SMPL model") and the PIFu human body 3D model (hereinafter referred to as "PIFu model") that correspond to the human body image. The SMPL human body three-dimensional model is a parameterized human body three-dimensional model, and this human body three-dimensional model is decided by 72 pose parameters (controlling a posture of a person, and including a total of 24 skeleton points) and 10 shape parameters (controlling a shape of the person, for example, tall, short, fat and thin). There are 6890 fixed vertices in the generated SMPL model, and each of the vertices has a preset binding relationship with a skeleton point of the human body. Therefore, the SMPL model may be considered as a drivable human body 3D model. Unlike the SMPL model, the PIFu human body three-dimensional model is a non-parameterized model, and thus, an accurate human body surface model containing clothes can be directly generated.

Step 202, matching the SMPL human body three-dimensional model with the PIFu human body three-dimensional model to obtain a matching result of a vertex of the PIFu human body three-dimensional model and the SMPL human body three-dimensional model.

In this embodiment, the executing body may perform the matching on the SMPL model and the PIFu model that are extracted in step 201, thereby obtaining the matching result of the vertex of the PIFu model and the SMPL model. On the one hand, since the SMPL model is a model that may be driven but can not express details of a human body such as clothes and hair, the SMPL model is essentially an image of a naked human body. On the other hand, the PIFu model is an undrivable model, because the point on the model is not bound to any skeleton point. Therefore, the matching is performed on the SMPL model and the PIFu model in this embodiment, and thus, a drivable human body 3D model is finally obtained. Specifically, the SMPL model may be divided into a plurality of portions according to the body structure signs of the person, and then, the SMPL model and the PIFu model are projected onto a two-dimensional (2D) plane to obtain corresponding 2D projection diagrams. The matching is performed based on the 2D projection diagrams, thereby obtaining a matching result of each vertex in the PIFu model and each portion of the SMPL model.

Step 203, determining a vertex of the SMPL human body three-dimensional model closest to the vertex of the PIFu human body three-dimensional model based on the matching result, to obtain a binding weight of the vertex of the PIFu human body three-dimensional model and each skeleton point of the SMPL human body three-dimensional model.

In this embodiment, the executing body may determine a vertex of the SMPL model that is closest to each vertex of the PIFu model based on the above matching result, thus obtaining the binding weight of the each vertex of the PIFu model and the each skeleton point of the SMPL model. Since the point on the PIFu model is not bound to any skeleton point, the PIFu model cannot be driven. Therefore, after the matching result of the each vertex of the PIFu model and the SMPL model is obtained, based on the matching result, the vertex of the SMPL model that is closest to the each vertex of the PIFu model may be obtained by calculating distances between the each vertex of the PIFu model and all vertices of the SMPL model. Moreover, the weight of the closest vertex of the SMPL model is used as the weight of the vertex of the PIFu model. Thus, the binding weight of the each vertex of the PIFu model and the each skeleton point of the SMPL model is obtained.

Step 204, outputting a drivable human body three-dimensional model.

In this embodiment, the executing body may output the drivable human body three-dimensional model, the drivable human body three-dimensional model including the PIFu human body three-dimensional model, the each skeleton point of the SMPL human body three-dimensional model, and the binding weight of the vertex of the PIFu human body three-dimensional model and the each skeleton point of the SMPL human body three-dimensional model. The drivable human body 3D model may be obtained based on the above steps, and the drivable human body 3D model includes the PIFu model, the PIFu model including a vertex and a patch. Here, the vertex refers to a vertex of a surface of an object in the 3D model, the patch represents a small surface, and the patch is formed by connecting several vertices. The drivable human body 3D model further includes 24 skeleton points of the SMPL model, and the binding weight of the each vertex of the PIFu model and the each skeleton point of the SMPL model. In this embodiment, the each vertex of the PIFu model and the each skeleton point of the SMPL model are bound, thus implementing the driving of the PIFu model.

According to the method for generating a human body three-dimensional model provided in the embodiment of the present disclosure, the single human body image is first received, and the SMPL human body three-dimensional model and the PIFu human body three-dimensional model that correspond to the human body image are extracted. Then, the matching is performed on the SMPL human body three-dimensional model and the PIFu human body three-dimensional model to obtain the matching result of the vertex of the PIFu human body three-dimensional model and the SMPL human body three-dimensional model. Next, the vertex of the SMPL human body three-dimensional model that is closest to the vertex of the PIFu human body three-dimensional model is determined based on the matching result, to obtain the binding weight of the vertex of the PIFu human body three-dimensional model and the each skeleton point of the SMPL human body three-dimensional model. Finally, the drivable human body three-dimensional model is outputted. The embodiment of the present disclosure provides a method of generating a driveable human body three-dimensional model based on a single image, which reduces the cost of generating the driveable human body three-dimensional model and improves the efficiency of generating the driveable human body three-dimensional model.

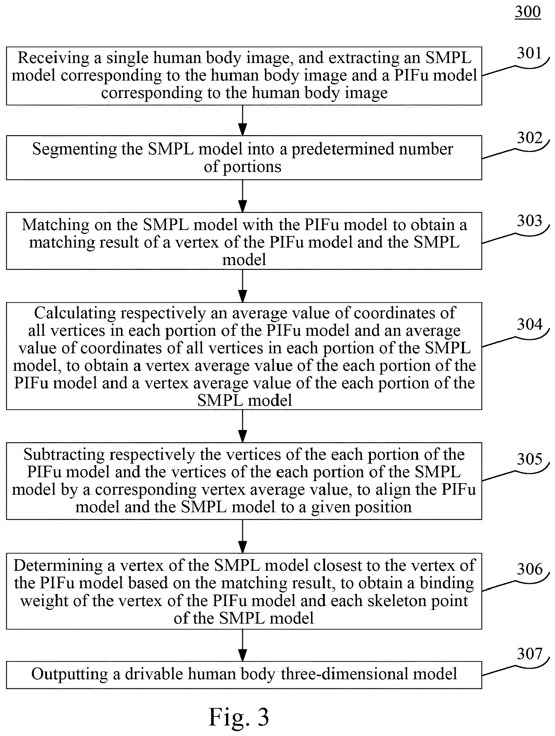

Further referring to Fig. 3, Fig. 3 illustrates a flow 300 of the method for generating a human body three-dimensional model according to another embodiment of the present disclosure. The method for generating a human body three-dimensional model includes the following steps.

Step 301, receiving a single human body image, and extracting an SMPL model corresponding to the human body image and a PIFu model corresponding to the human body image.

In this embodiment, an executing body of the method for generating a human body three-dimensional model may receive a single human body image inputted by a user, and extract the SMPL model and the PIFu model that correspond to the human body image.

Step 302, segmenting the SMPL model into a predetermined number of portions.

In this embodiment, the executing body may segment the SMPL model into the predetermined number of portions, for example, segment the SMPL model into 6 portions (a head, a body, a left hand, a right hand, a left leg, and a right leg) according to the body structure signs of a person. The SMPL model is segmented into the predetermined number of portions, and matching is performed on the SMPL model and the PIFu model based on the segmentation result, which can make the matching result more accurate.

In some alternative implementations of this embodiment, based on a position of a vertex of the SMPL model, corresponding is performed on the vertex of the SMPL model and each portion of the SMPL model. Since the position of the vertex on the SMPL model is fixed on the body, the corresponding may be performed on the vertex of the SMPL model and the each portion of the SMPL model according to the position of the vertex of the SMPL model.

Step 303, matching on the SMPL model with the PIFu model to obtain a matching result of a vertex of the PIFu model and the SMPL model.

In this embodiment, the executing body may perform the matching on the SMPL model and the PIFu model, thereby obtaining the matching result of the vertex of the PIFu model and the SMPL model. The matching is performed on each vertex of the PIFu model and each portion of the SMPL model, thereby obtaining a matching result of the each vertex of the PIFu model and the each portion of the SMPL model.

Step 304, calculating respectively an average value of coordinates of all vertices in each portion of the PIFu model and an average value of coordinates of all vertices in each portion of the SMPL model, to obtain a vertex average value of the each portion of the PIFu model and a vertex average value of the each portion of the SMPL model.

In this embodiment, the average value of the coordinates of all the vertices in the each portion of the PIFu model and the average value of the coordinates of all the vertices in the each portion of the SMPL model are respectively calculated, to obtain the vertex average value of the each portion of the PIFu model and the vertex average value of the each portion of the SMPL model. Specifically, calculating an average value of coordinates of all vertices in each portion, a vertex average value of this portion is obtained, which is also a position of a center of gravity of the portion.

Step 305, subtracting respectively the vertices of the each portion of the PIFu model and the vertices of the each portion of the SMPL model by a corresponding vertex average value, to align the PIFu model and the SMPL model to a given position.

In this embodiment, the vertices of the each portion of the PIFu model and the vertices of the each portion of the SMPL model are respectively subtracted by the corresponding vertex average value, and thus, the PIFu model and the SMPL model are aligned to the given position. The vertex average value of the each portion of the PIFu model and the vertex average value of the each portion of the SMPL model are obtained in step 304, and on this basis, all the vertices of the each portion of the PIFu model and all the vertices of the each portion of the SMPL model are subtracted by the corresponding vertex average value of each portion. Thus, the PIFu model and the SMPL model are aligned to the given position, that is, aligned to the position of (0,0,0), thereby avoiding the occurrence of misalignment of the PIFu model and the SMPL model.

Step 306, determining a vertex of the SMPL model closest to the vertex of the PIFu model based on the matching result, to obtain a binding weight of the vertex of the PIFu model and each skeleton point of the SMPL model.

In this embodiment, the executing body may determine the vertex of the SMPL model that is closest to the vertex of the PIFu model based on the matching result, to obtain the binding weight of the vertex of the PIFu model and the each skeleton point of the SMPL model.

In some alternative implementations of this embodiment, a distance between the vertex of the PIFu model and a corresponding vertex of the SMPL model is calculated based on the matching result, to determine the vertex of the SMPL model that is closest to the vertex of the PIFu model. On the basis that the matching result of the vertex of the PIFu model and the each portion of the SMPL model is obtained, a distance between the vertex of the PIFu model and all the vertices in a portion of the SMPL model where this vertex is present is calculated, thus determining the vertex of the SMPL model that is closest to the vertex of the PIFu model.

In some alternative implementations of this embodiment, the above calculation for the distance between the vertex of the PIFu model and the corresponding vertex of the SMPL model refers to a calculation for a Euclidean distance between the vertex of the PIFu model and the corresponding vertex of the SMPL model. The Euclidean distance in two-dimensional and three-dimensional spaces is an actual distance between two points.

In some alternative implementations of this embodiment, the weight of the closest vertex of the SMPL model is used as the weight of the vertex of the PIFu model, to obtain the binding weight of the vertex of the PIFu model and the each skeleton point of the SMPL model. The weight of the vertex of the SMPL model is a parameter possessed by the SMPL model itself, which refers to a binding relationship between 6890 vertices and 24 skeleton points in the SMPL model. In this embodiment, the weight of the closest vertex of the SMPL model is used as the weight of the vertex of the PIFu model to obtain the binding weight of each vertex of the PIFu model and the 24 skeleton points, and the transformation matrix of the each vertex is calculated through the binding weight, such that the each vertex is driven to enable the PIFu model to move.

Step 307, outputting a drivable human body three-dimensional model.

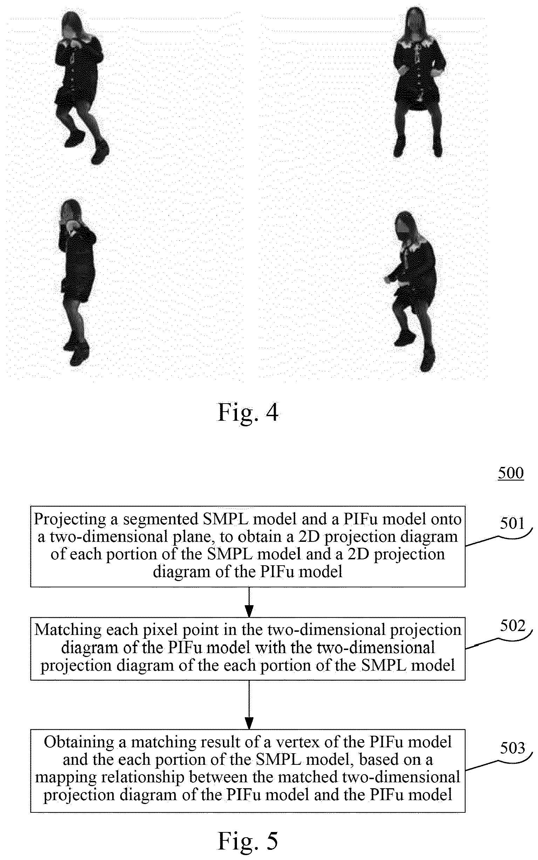

In this embodiment, the executing body may output the drivable human body three-dimensional model including the PIFu model, the each skeleton point of the SMPL model, and the binding weight of the vertex of the PIFu model and the each skeleton point of the SMPL model. Each vertex is driven to enable the PIFu model to move, as shown in Fig. 4. Fig. 4 is a driving effect diagram of the outputted drivable human body three-dimensional model.

According to the method for generating a human body three-dimensional model provided in the embodiment of the present disclosure, the single human body image is first received, the SMPL model and the PIFu model that correspond to the human body image are extracted, and the SMPL model is segmented into the predetermined number of portions. Then, matching is performed on an SMPL human body three-dimensional model and a PIFu human body three-dimensional model to obtain a matching result of a vertex of the PIFu human body three-dimensional model and the SMPL human body three-dimensional model. Next, the average value of the coordinates of all the vertices in the each portion of the PIFu model and the average value of the coordinates of all the vertices in the each portion of the SMPL model are respectively calculated, to obtain the vertex average value of the each portion of the PIFu model and the vertex average value of the each portion of the SMPL model. The vertices of the each portion of the PIFu model and the vertices of the each portion of the SMPL model are respectively subtracted by the corresponding vertex average value, to align the PIFu model and the SMPL model to the given position. Then, the vertex of the SMPL model that is closest to the vertex of the PIFu model is determined based on the matching result, to obtain the binding weight of the vertex of the PIFu model and the each skeleton point of the SMPL model. Finally, the drivable human body three-dimensional model is outputted. The present disclosure provides a method of generating a driveable human body three-dimensional model based on a single image, which reduces the cost of generating the driveable human body three-dimensional model and improves the efficiency of generating the driveable human body three-dimensional model.

Further referring to Fig. 5, Fig. 5 is an exploded flow diagram 500 of the matching step in the method for generating a human body three-dimensional model shown in Fig. 3. The matching step may be exploded as follows.

Step 501, projecting a segmented SMPL model and a PIFu model onto a two-dimensional plane, to obtain a 2D projection diagram of each portion of the SMPL model and a 2D projection diagram of the PIFu model.

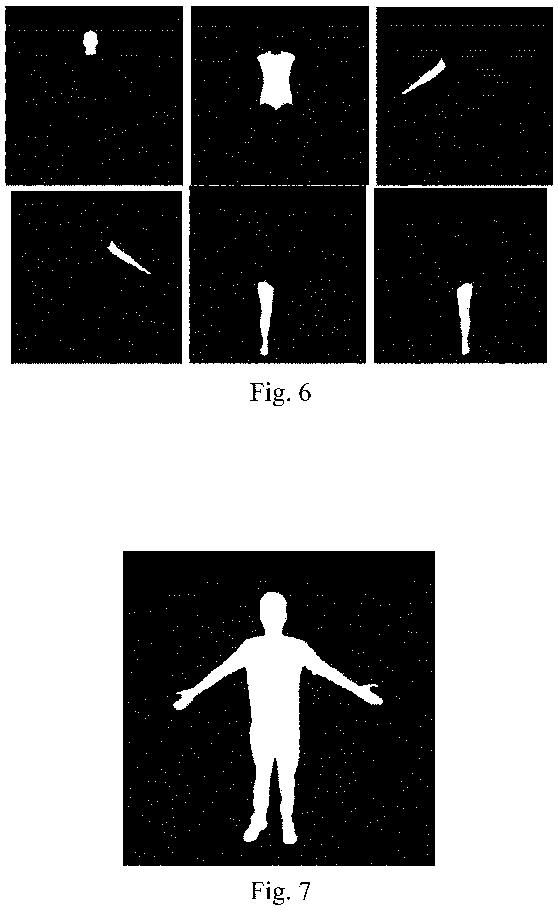

In this embodiment, the segmented SMPL model and the PIFu model are projected onto the 2D plane to obtain the 2D projection diagram of the each portion of the SMPL model and the 2D projection diagram of the PIFu model. Specifically, the projection diagram on the 2D plane may be obtained by adopting a default camera parameter (i.e., front projection) and using a rendering method. For example, the SMPL model is segmented into 6 portions: a head, a body, a left hand, a right hand, a left leg, and a right leg. Accordingly, the obtained 2D projection diagrams of the 6 portions of the SMPL model are as shown in Fig. 6. As shown in Fig. 6, the 2D projection diagrams from the upper left to the bottom right are the 2D projection diagram of the head, the 2D projection diagram of the body, the 2D projection diagram of the left hand, the 2D projection diagram of the right hand, the 2D projection diagram of the left leg, and the 2D projection diagram of the right leg. The obtained 2D projection diagram of the PIFu model is as shown in Fig. 7.

Step 502, matching each pixel point in the two-dimensional projection diagram of the PIFu model with the two-dimensional projection diagram of the each portion of the SMPL model.

In this embodiment, the executing body may perform the matching on the each pixel point in the two-dimensional projection diagram of the PIFu model and the two-dimensional projection diagram of the each portion of the SMPL model, to ensure the accuracy of the matching.

In some alternative implementations of this embodiment, the executing body may perform the matching on a pixel point in the two-dimensional projection diagram of the PIFu model that corresponds to a vertex of the PIFu model and the two-dimensional projection diagram of the each portion of the SMPL model.

In some alternative implementations of this embodiment, the matching result of the each pixel in the 2D projection diagram of the PIFu model and the two-dimensional projection diagram of the each portion of the SMPL model is calculated by adopting a graph cut algorithm, to perform the matching on the each pixel point in the 2D projection diagram of the PIFu model and the 2D projection diagram of the each portion of the SMPL model, thereby ensuring the accuracy of the matching result. For example, an Alpha expansion graph cut algorithm may be adopted to perform the calculation, and this algorithm is used by adopting an existing algorithm library (e.g., the maxflow algorithm library in python). The process of performing the calculation by adopting the Alpha expansion graph cut algorithm is as follows.

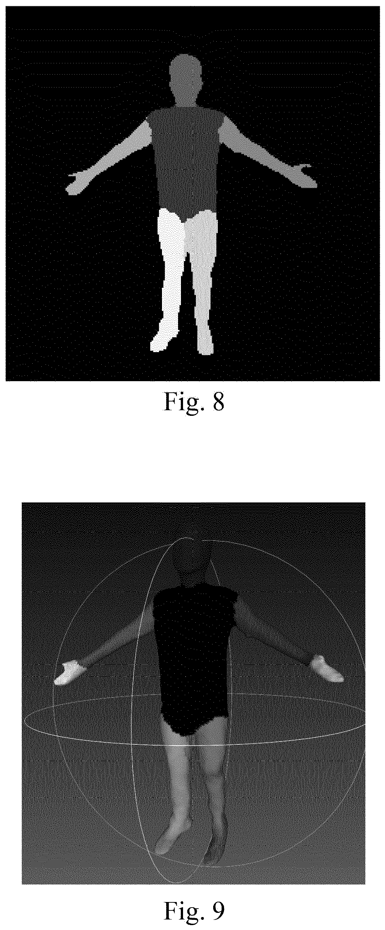

It is assumed that the segmented diagram of the 2D projection diagram of the PIFu model is $L_{pifu}$, as shown in Fig. 8. Fig. 8 is a segmentation diagram of the 2D projection diagram of the PIFu model. The 2D projection diagram of the each portion of the SMPL model is as shown in Fig. 6. An optimized target may be expressed in the following form:

$$\min_{L_{pifu}} \sum_p U\big(L_{pifu}(p)\big) + \gamma \sum_{any\ p!=q} V\big(L_{pifu}(p), L_{pifu}(q)\big).$$

Here,

$$U\left(L_{pifu}(p)\right) = \min_{r|L_{smpl}(r)=L_{pifu}(p)} \|p - r\|_2,$$

and

$$V\left(L_{pifu}(p), L_{pifu}(q)\right) = \begin{cases} 1 & if\ L_{pifu}(p) \neq L_{pifu}(q) \\ 0 & otherwise. \end{cases}$$

Here, p and q are arbitrary pixel points on the 2D projection diagram of the PIFu model, and p≠q; r is an arbitrary pixel point on the 2D projection diagram of the each portion of the SMPL model; $U(L_{pifu}(p))$ represents a similarity between p and r, and $V(L_{pifu}(p), L_{pifu}(q))$ represents a smoothness between p and q (two points in Lpifu).

Step 503, obtaining a matching result of a vertex of the PIFu model and the each portion of the SMPL model, based on a mapping relationship between the matched two-dimensional projection diagram of the PIFu model and the PIFu model.

In this embodiment, the executing body may obtain the matching result of each vertex of the PIFu model and the each portion of the SMPL model, based on the mapping relationship between the matched two-dimensional projection diagram of the PIFu model and the PIFu model. Mapping is performed on the matched two-dimensional projection diagram of the PIFu model and the PIFu model, and matching the each vertex of the PIFu model with the each portion of the SMPL model based on the mapping relationship, as shown in Fig. 9. Fig. 9 is a diagram of a 3D matching result generated based on a 2D matching result.

According to the matching method provided in the embodiment of the present disclosure, the segmented SMPL model and the PIFu model are first projected onto the 2D plane to obtain the 2D projection diagram of the each portion of the SMPL model and the 2D projection diagram of the PIFu model. Then, the matching is performed on the each pixel point in the two-dimensional projection diagram of the PIFu model and the two-dimensional projection diagram of the each portion of the SMPL model. Finally, the matching result of the vertex of the PIFu model and the each portion of the SMPL model is obtained based on the mapping relationship between the matched two-dimensional projection diagram of the PIFu model and the PIFu model. According to the matching method provided in the embodiment of the present disclosure, the matching can be performed on the SMPL model and the PIFu model, such that the binding relationship between the each vertex of the PIFu model and the each skeleton point of the SMPL model is obtained based on the matching result, thus causing the PIFu model to move.

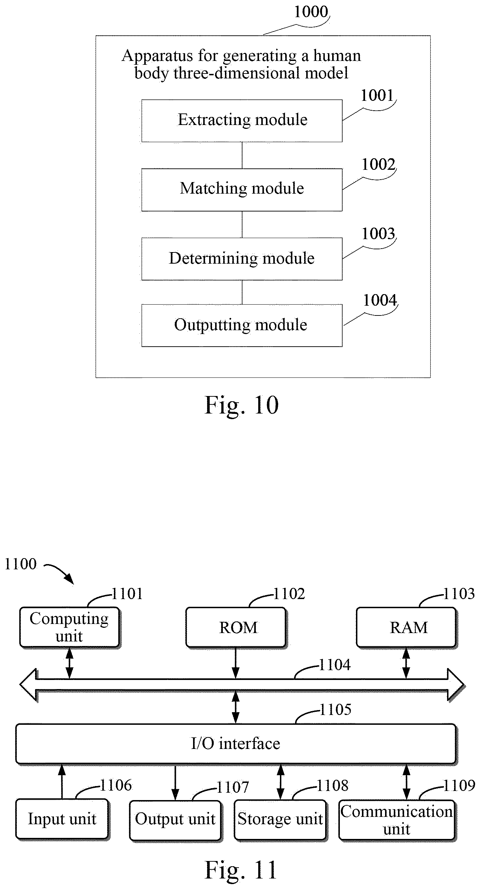

Further referring to Fig. 10, as an implementation of the method shown in the above drawings, an embodiment of the present disclosure provides an apparatus for generating a human body three-dimensional model. The embodiment of the apparatus corresponds to the embodiment of the method shown in Fig. 2, and the apparatus may be applied in various electronic devices.

As shown in Fig. 10, the apparatus 1000 for generating a human body three-dimensional model in this embodiment may include: an extracting module 1001, a matching module 1002, a determining module 1003 and an outputting module 1004. Here, the extracting module 1001 is configured to receive a single human body image, and extract an SMPL human body three-dimensional model corresponding to the human body image and a PIFu human body three-dimensional model corresponding to the human body image. The matching module 1002 is configured to match the SMPL human body three-dimensional model with the PIFu human body three-dimensional model to obtain a matching result of a vertex of the PIFu human body three-dimensional model and the SMPL human body three-dimensional model. The determining module 1003 is configured to determine a vertex of the SMPL human body three-dimensional model closest to the vertex of the PIFu human body three-dimensional model based on the matching result, to obtain a binding weight of the vertex of the PIFu human body three-dimensional model and each skeleton point of the SMPL human body three-dimensional model. The outputting module 1004 is configured to output a drivable human body three-dimensional model.

In this embodiment, for specific processes of the extracting module 1001, the matching module 1002, the determining module 1003 and the outputting module 1004 in the apparatus 1000 for generating a human body three-dimensional model, and their technical effects, reference may be respectively made to relative descriptions of steps 201-204 in the corresponding embodiment of Fig. 2, which will not be repeatedly described here.

In some alternative implementations of this embodiment, the apparatus for generating a human body three-dimensional model further includes: a segmenting module, configured to segment the SMPL human body three-dimensional model into a predetermined number of portions; and a corresponding module, configured to perform corresponding on a vertex of the SMPL human body three-dimensional model and each portion of the SMPL human body three-dimensional model based on a position of vertex of the SMPL human body three-dimensional model.

In some alternative implementations of this embodiment, the matching module includes: a projecting sub-module, configured to project the segmented SMPL human body three-dimensional model and the PIFu human body three-dimensional model onto a two-dimensional plane, to obtain a two-dimensional projection diagram of each portion of the SMPL human body three-dimensional model and a two-dimensional projection diagram of the PIFu human body three-dimensional model; a matching sub-module, configured to match each pixel point in the two-dimensional projection diagram of the PIFu human body three-dimensional model with the two-dimensional projection diagram of each portion of the SMPL human body three-dimensional model; and a mapping sub-module, configured to obtain a matching result of the vertex of the PIFu human body three-dimensional model and each portion of the SMPL human body three-dimensional model, based on a mapping relationship between the matched two-dimensional projection diagram of the PIFu human body three-dimensional model and the PIFu human body three-dimensional model.

In some alternative implementations of this embodiment, the matching sub-module is further configured to: calculate a matching result of each pixel point in the two-dimensional projection diagram of the PIFu human body three-dimensional model and the two-dimensional projection diagram of each portion of the SMPL human body three-dimensional model by adopting a graph cut algorithm, to match each pixel point in the two-dimensional projection diagram of the PIFu human body three-dimensional model with the two-dimensional projection diagram of each portion of the SMPL human body three-dimensional model.

In some alternative implementations of this embodiment, the apparatus for generating a human body three-dimensional model further includes: a calculating module, configured to calculate respectively an average value of coordinates of all vertices in each portion of the PIFu human body three-dimensional model and an average value of coordinates of all vertices in the each portion of the SMPL human body three-dimensional model, to obtain a vertex average value of the each portion of the PIFu human body three-dimensional model and a vertex average value of the each portion of the SMPL human body three-dimensional model; and an aligning module, configured to subtract respectively the vertices of the each portion of the PIFu human body three-dimensional model and the vertices of the each portion of the SMPL human body three-dimensional model by a corresponding vertex average value, to align the PIFu human body three-dimensional model and the SMPL human body three-dimensional model to a given position.

In some alternative implementations of this embodiment, the determining module is further configured to: calculate a distance between the vertex of the PIFu human body three-dimensional model and a corresponding vertex of the SMPL human body three-dimensional model based on the matching result, to determine the vertex of the SMPL human body three-dimensional model closest to the vertex of the PIFu human body three-dimensional model; and use a weight of the closest vertex of the SMPL human body three-dimensional model as a weight of the vertex of the PIFu human body three-dimensional model, to obtain the binding weight of the vertex of the PIFu human body three-dimensional model and each skeleton point of the SMPL human body three-dimensional model.

In some alternative implementations of this embodiment, the distance between the vertex of the PIFu human body three-dimensional model and the corresponding vertex of the SMPL human body three-dimensional model is a Euclidean distance between the vertex of the PIFu human body three-dimensional model and the corresponding vertex of the SMPL human body three-dimensional model.

According to an embodiment of the present disclosure, embodiments of the present disclosure further provide an electronic device, a readable storage medium and a computer program product.

Fig. 11 is a schematic block diagram of an example electronic device 1100 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital assistant, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in FIG. 11, the device 1100 includes a computing unit 1101, which may perform various appropriate actions and processes according to a computer program stored in a read-only memory (ROM) 1102 or a computer program loaded into a random access memory (RAM) 1103 from a storage unit 1108. In RAM 1103, various programs and data required for operation of the device 1100 may also be stored. The computing units 1101, ROM 1102 and RAM 1103 are connected to each other via a bus 1104. An input/output (I/O) interface 1105 is also connected to bus 1104.

A plurality of components in the device 1100 are connected to the I/O interface 1105, including an input unit 1106, such as a keyboard, a mouse, and the like; an output units 1107, such as various types of displays, speakers, and the like; a storage unit 1108, such as a magnetic disk, an optical disk, or the like; and a communication unit 1109, such as a network card, a modem, or a wireless communication transceiver. The communication unit 1109 allows the device 1100 to exchange information/data with other devices over a computer network such as the Internet and/or various telecommunications networks.

The computing unit 1101 may be various general-purpose and/or special-purpose processing components having processing and computing capabilities. Some examples of computing units 1101 include, but are not limited to, central processing units (CPUs), graphics processing units (GPUs), various specialized artificial intelligence (AI) computing chips, various computing units running machine learning model algorithms, digital signal processors (DSPs), and any suitable processors, controllers, microcontrollers, and the like. The computing unit 1101 performs various methods and processes described above, such as a method of generating a human body three-dimensional model. For example, in some embodiments, a method of generating a human three-dimensional model may be implemented as a computer software program tangibly embodied in a machine-readable medium, such as the storage unit 1108. In some embodiments, some or all of the computer programs may be loaded and/or installed on the device 1100 via the ROM 1102 and/or the communication unit 1109. When the computer programs are loaded to the RAM 1103 and executed by the computing unit 1101, one or more steps of the above-described method for generating a human body three-dimensional model may be performed. Alternatively, in other embodiments, the computing unit 1101 may be configured to perform the method for generating a human body three-dimensional model by any other suitable means (e.g., by means of firmware).

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

The program codes for carrying out the methods of the present disclosure may be written in any combination of one or more programming languages. These program codes may be provided to a processor or a controller of a general purpose computer, special purpose computer, or other programmable data processing apparatus such that the program codes, when executed by the processor or controller, causes the functions/operations specified in the flowchart and/or block diagram to be implemented. The program codes may be executed entirely on the machine, partly on the machine, partly on the machine as a stand-alone software package and partly on the remote machine or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the foregoing.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method for generating a human body three-dimensional model, comprising:

   receiving (201) a single human body image, and extracting a Skinned Multi-Person Linear, SMPL, human body three-dimensional model corresponding to the human body image and a Pixel-aligned Implicit Function, PIFu, human body three-dimensional model corresponding to the human body image;

   matching (202) the SMPL human body three-dimensional model with the PIFu human body three-dimensional model to obtain a matching result of a vertex of the PIFu human body three-dimensional model and the SMPL human body three-dimensional model;

   determining (203) a vertex of the SMPL human body three-dimensional model closest to the vertex of the PIFu human body three-dimensional model based on the matching result to obtain a binding weight of the vertex of the PIFu human body three-dimensional model and each skeleton point of the SMPL human body three-dimensional model; and

   outputting (204) a drivable human body three-dimensional model, the drivable human body three-dimensional model including the PIFu human body three-dimensional model, each skeleton point of the SMPL human body three-dimensional model, and the binding weight of the vertex of the PIFu human body three-dimensional model and each skeleton point of the SMPL human body three-dimensional model.

2. The method according to claim 1, wherein, before matching the SMPL human body three-dimensional model with the PIFu human body three-dimensional model, the method further comprises:

   segmenting the SMPL human body three-dimensional model into a predetermined number of portions; and

   performing corresponding on a vertex of the SMPL human body three-dimensional model and each portion of the SMPL human body three-dimensional model based on a position of vertex of the SMPL human body three-dimensional model.

3. The method according to claim 2, wherein the matching on the SMPL human body three-dimensional model with the PIFu human body three-dimensional model to obtain a matching result of a vertex of the PIFu human body three-dimensional model and the SMPL human body three-dimensional model comprises:

   projecting the segmented SMPL human body three-dimensional model and the PIFu human body three-dimensional model onto a two-dimensional plane, to obtain a two-dimensional projection diagram of each portion of the SMPL human body three-dimensional model and a two-dimensional projection diagram of the PIFu human body three-dimensional model;

   matching each pixel point in the two-dimensional projection diagram of the PIFu human body three-dimensional model with the two-dimensional projection diagram of each portion of the SMPL human body three-dimensional model; and

   obtaining a matching result of the vertex of the PIFu human body three-dimensional model and each portion of the SMPL human body three-dimensional model, based on a mapping relationship between the matched two-dimensional projection diagram of the PIFu human body three-dimensional model and the PIFu human body three-dimensional model.

4. The method according to claim 3, wherein the matching each pixel point in the two-dimensional projection diagram of the PIFu human body three-dimensional model with the two-dimensional projection diagram of each portion of the SMPL human body three-dimensional model comprises:
   calculating a matching result of each pixel point in the two-dimensional projection diagram of the PIFu human body three-dimensional model and the two-dimensional projection diagram of each portion of the SMPL human body three-dimensional model by adopting a graph cut algorithm, to match each pixel point in the two-dimensional projection diagram of the PIFu human body three-dimensional model with the two-dimensional projection diagram of the each portion of the SMPL human body three-dimensional model.

5. The method according to claim 2 or 3, wherein before the determining a vertex of the SMPL human body three-dimensional model closest to the vertex of the PIFu human body three-dimensional model based on the matching result, the method further comprises:

calculating respectively an average value of coordinates of all vertices in each portion of the PIFu human body three-dimensional model and an average value of coordinates of all vertices in each portion of the SMPL human body three-dimensional model, to obtain a vertex average value of each portion of the PIFu human body three-dimensional model and a vertex average value of each portion of the SMPL human body three-dimensional model; and

subtracting respectively the vertices of each portion of the PIFu human body three-dimensional model and the vertices of each portion of the SMPL human body three-dimensional model by a corresponding vertex average value, to align the PIFu human body three-dimensional model and the SMPL human body three-dimensional model to a given position.

6. The method according to claim 5, wherein the determining a vertex of the SMPL human body three-dimensional model closest to the vertex of the PIFu human body three-dimensional model based on the matching result to obtain a binding weight of the vertex of the PIFu human body three-dimensional model and each skeleton point of the SMPL human body three-dimensional model comprises:

calculating a distance between the vertex of the PIFu human body three-dimensional model and a corresponding vertex of the SMPL human body three-dimensional model based on the matching result, to determine the vertex of the SMPL human body three-dimensional model closest to the vertex of the PIFu human body three-dimensional model; and

using a weight of the closest vertex of the SMPL human body three-dimensional model as a weight of the vertex of the PIFu human body three-dimensional model, to obtain the binding weight of the vertex of the PIFu human body three-dimensional model and each skeleton point of the SMPL human body three-dimensional model; preferably, the distance between the vertex of the PIFu human body three-dimensional model and the corresponding vertex of the SMPL human body three-dimensional model is a Euclidean distance between the vertex of the PIFu human body three-dimensional model and the corresponding vertex of the SMPL human body three-dimensional model.

7. An apparatus for generating a human body three-dimensional model, comprising:

an extracting module (1001), configured to receive a single human body image, and extract a Skinned Multi-Person Linear, SMPL, human body three-dimensional model corresponding to the human body image and a Pixel-aligned Implicit Function, PIFu, human body three-dimensional model corresponding to the human body image;

a matching module (1002), configured to match the SMPL human body three-dimensional model with the PIFu human body three-dimensional model to obtain a matching result of a vertex of the PIFu human body three-dimensional model and the SMPL human body three-dimensional model;

a determining module (1003), configured to determine a vertex of the SMPL human body three-dimensional model closest to the vertex of the PIFu human body three-dimensional model based on the matching result to obtain a binding weight of the vertex of the PIFu human body three-dimensional model and each skeleton point of the SMPL human body three-dimensional model; and

an outputting module (1004), configured to output a drivable human body three-dimensional model, the drivable human body three-dimensional model including the PIFu human body three-dimensional model, each skeleton point of the SMPL human body three-dimensional model, and the binding weight of the vertex of the PIFu human body three-dimensional model and the each skeleton point of the SMPL human body three-dimensional model.

8. The apparatus according to claim 7, further comprising:

a segmenting module, configured to segment the SMPL human body three-dimensional model into a predetermined number of portions; and

a corresponding module, configured to perform corresponding on a vertex of the SMPL human body three-dimensional model and each portion of the SMPL human body three-dimensional model based on a position of vertex of the SMPL human body three-dimensional model.

9. The apparatus according to claim 8, wherein the matching module (1002) comprises:

a projecting sub-module, configured to project the segmented SMPL human body three-dimensional model and the PIFu human body three-dimensional model onto a two-dimensional plane, to obtain a two-dimensional projection diagram of each portion of the SMPL human body three-dimensional model and a two-dimensional projection diagram of the PIFu human body three-dimensional model;

a matching sub-module, configured to match each pixel point in the two-dimensional projection diagram of the PIFu human body three-dimensional model with the two-dimensional projection diagram of each portion of the SMPL human body three-dimensional model; and

a mapping sub-module, configured to obtain a matching result of the vertex of the PIFu human body three-dimensional model and each portion of the SMPL human body three-dimensional model, based on a mapping relationship between the matched two-dimensional projection diagram of the PIFu human body three-dimensional model and the PIFu human body three-dimensional model.

**10.** The apparatus according to claim 9, wherein the matching sub-module is further configured to:
calculate a matching result of each pixel point in the two-dimensional projection diagram of the PIFu human body three-dimensional model and the two-dimensional projection diagram of each portion of the SMPL human body three-dimensional model by adopting a graph cut algorithm, to match the each pixel point in the two-dimensional projection diagram of the PIFu human body three-dimensional model with the two-dimensional projection diagram of the each portion of the SMPL human body three-dimensional model.

**11.** The apparatus according to claim 8 or 9, further comprising:

a calculating module, configured to calculate respectively an average value of coordinates of all vertices in each portion of the PIFu human body three-dimensional model and an average value of coordinates of all vertices in the each portion of the SMPL human body three-dimensional model, to obtain a vertex average value of each portion of the PIFu human body three-dimensional model and a vertex average value of each portion of the SMPL human body three-dimensional model; and

an aligning module, configured to subtract respectively the vertices of each portion of the PIFu human body three-dimensional model and the vertices of each portion of the SMPL human body three-dimensional model by a corresponding vertex average value, to align the PIFu human body three-dimensional model and the SMPL human body three-dimensional model to a given position.

**12.** The apparatus according to claim 11, wherein the determining module (1003) is further configured to:

calculate a distance between the vertex of the PIFu human body three-dimensional model and a corresponding vertex of the SMPL human body three-dimensional model based on the matching result, to determine the vertex of the SMPL human body three-dimensional model closest to the vertex of the PIFu human body three-dimensional model; and

use a weight of the closest vertex of the SMPL human body three-dimensional model as a weight of the vertex of the PIFu human body three-dimensional model, to obtain the binding weight of the vertex of the PIFu human body three-dimensional model and each skeleton point of the SMPL human body three-dimensional model.

preferably, the distance between the vertex of the PIFu human body three-dimensional model and the corresponding vertex of the SMPL human body three-dimensional model is a Euclidean distance between the vertex of the PIFu human body three-dimensional model and the corresponding vertex of the SMPL human body three-dimensional model.

**13.** An electronic device, comprising:

at least one processor (1101); and
a memory (1108), communicated with the at least one processor,
wherein the memory (1108) stores an instruction executable by the at least one processor (1101), and the instruction is executed by the at least one processor (1101), to enable the at least one processor to perform the method according to any one of claims 1-6.

**14.** A non-transitory computer readable storage medium, storing a computer instruction, wherein the computer instruction is used to cause a computer to perform the method according to any one of claims 1-6.

**15.** A computer program product, comprising a computer program, wherein the computer program, when executed by a processor, implements the method according to any one of claims 1-6.

<u>100</u>

Fig. 1

<u>200</u>

| Receiving a single human body image, and extracting an SMPL human body three-dimensional model corresponding to the human body image and a PIFu human body three-dimensional model corresponding to the human body image | 201 |

| Matching the SMPL human body three-dimensional model with the PIFu human body three-dimensional model to obtain a matching result of a vertex of the PIFu human body three-dimensional model and the SMPL human body three-dimensional model | 202 |

| Determining a vertex of the SMPL human body three-dimensional model closest to the vertex of the PIFu human body three-dimensional model based on the matching result, to obtain a binding weight of the vertex of the PIFu human body three-dimensional model and each skeleton point of the SMPL human body three-dimensional model | 203 |

| Outputting a drivable human body three-dimensional model | 204 |

Fig. 2

300

| Receiving a single human body image, and extracting an SMPL model corresponding to the human body image and a PIFu model corresponding to the human body image | 301 |

↓

| Segmenting the SMPL model into a predetermined number of portions | 302 |

↓

| Matching on the SMPL model with the PIFu model to obtain a matching result of a vertex of the PIFu model and the SMPL model | 303 |

↓

| Calculating respectively an average value of coordinates of all vertices in each portion of the PIFu model and an average value of coordinates of all vertices in each portion of the SMPL model, to obtain a vertex average value of the each portion of the PIFu model and a vertex average value of the each portion of the SMPL model | 304 |

↓

| Subtracting respectively the vertices of the each portion of the PIFu model and the vertices of the each portion of the SMPL model by a corresponding vertex average value, to align the PIFu model and the SMPL model to a given position | 305 |

↓

| Determining a vertex of the SMPL model closest to the vertex of the PIFu model based on the matching result, to obtain a binding weight of the vertex of the PIFu model and each skeleton point of the SMPL model | 306 |

↓

| Outputting a drivable human body three-dimensional model | 307 |

Fig. 3

Fig. 4

500

| Projecting a segmented SMPL model and a PIFu model onto a two-dimensional plane, to obtain a 2D projection diagram of each portion of the SMPL model and a 2D projection diagram of the PIFu model | 501 |

| Matching each pixel point in the two-dimensional projection diagram of the PIFu model with the two-dimensional projection diagram of the each portion of the SMPL model | 502 |

| Obtaining a matching result of a vertex of the PIFu model and the each portion of the SMPL model, based on a mapping relationship between the matched two-dimensional projection diagram of the PIFu model and the PIFu model | 503 |

Fig. 5

Fig. 6

Fig. 7

Fig. 8

Fig. 9

1000

Apparatus for generating a human
body three-dimensional model

Extracting module — 1001

Matching module — 1002

Determining module — 1003

Outputting module — 1004

Fig. 10

1100

Computing unit — 1101

ROM — 1102

RAM — 1103

— 1104

I/O interface — 1105

Input unit — 1106

Output unit — 1107

Storage unit — 1108

Communication unit — 1109

Fig. 11